# EUROPÄISCHE PATENTSCHRIFT

(11) **EP 3 094 580 B1**
(45) Veröffentlichungstag und Bekanntmachung des Hinweises auf die Patenterteilung: **10.03.2021**
(21) Anmeldenummer: 14833335.4
(22) Anmeldetag: 19.12.2014
(51) Int. Cl.: B65G 15/34, F16G 1/10

(54) **TRANSPORTBAND SOWIE EINE MIT DIESEM TRANSPORTBAND AUSGESTATTETE TRANSPORTVORRICHTUNG**
CONVEYOR BELT AND CONVEYING DEVICE EQUIPPED WITH SAID CONVEYOR BELT
BANDE TRANSPORTEUSE ET DISPOSITIF DE TRANSPORT ÉQUIPÉ DE LADITE BANDE TRANSPORTEUSE

(30) Priorität: 16.01.2014 DE 102014100475
(43) Veröffentlichungstag der Anmeldung: 23.11.2016
(73) Patentinhaber: FORBO SIEGLING GMBH, 30179 Hannover (DE)
(72) Erfinder: BUCH, Torsten, 30900 Wedemark (DE); KABORÉ, Benjamin, 26133 Oldenburg (DE); HAYDUK, Claudius, 30627 Hannover (DE)
(74) Vertreter: Scheffler, Jörg
(86) Internationale Anmeldenummer: PCT/DE2014/100459
(87) Internationale Veröffentlichungsnummer: WO 2015/106735

(56) Entgegenhaltungen:
- EP-A1- 2 423 255
- EP-B1- 2 259 989
- WO-A1-2008/113195
- WO-A1-2012/161141
- CA-A1- 2 856 274
- DE-A1- 19 610 603
- US-A- 2 575 813
- US-A1- 2004 132 587

## Beschreibung

Die Erfindung betrifft ein endloses Transportband mit einem mehrschichtigen Aufbau, mit zumindest einer ersten, eine Laufseite bildenden Schicht und mit zumindest einer zweiten, insbesondere eine Tragseite bildenden Schicht, wobei zumindest eine der Schichten mit zumindest einer einen Zugträger bildenden Schicht mittels einer Adhäsionsschicht verbunden ist, wobei die Adhäsionsschicht eine Zusammensetzung mit einem ersten Anteil eines Adhäsionsmittels sowie mit einem zweiten Anteil eines Schmiermittels enthält. Weiterhin betrifft die Erfindung eine mit diesem Transportband ausgestattete Transportvorrichtung mit einer gleitenden Anordnung des Transportbandes auf einem Gleittisch der Transportvorrichtung.

Ein solches Transportband besteht in der Praxis aus einem Zugträger, welcher einerseits von einer die Tragseite bildenden Schicht bzw. Beschichtung, andererseits von einer die Laufseite bildenden Schicht bzw. Beschichtung eingeschlossen ist.

Es sind allgemein Bandförderer bekannt, die ein Transportband mit einem oberen vorlaufenden Abschnitt (Obertrum) und einem unteren rücklaufenden Abschnitt (Untertrum) aufweisen. Üblicherweise haben hierzu die Bandförderer einen eine Auflage bildenden Gleittisch, auf dem das lasttragende Trum gleitet. Solche Fördervorrichtungen werden zum Stückgut- und/oder Personentransport, beispielsweise im Automobilbau als parallel zum eigentlichen Montageband laufendes "Werkermitfahrband" eingesetzt.

Es ist bekannt, einen Gleittisch, auf dem das Obertrum läuft, mit einer unteren Gleitfläche schwimmend auf dem Untertrum abzutragen. Das Untertrum wird wiederum gleitend zur Unterlage abgetragen, und zwar über einen feststehenden Gleittisch. Bei diesem Stand der Technik wird also die Gewichtskraft der Last flächig durch das rücklaufende Untertrum geleitet.

Aus der gattungsgemäßen DE 196 10 603 A1 ist ein Schwerlastfördergurt für Schüttgüter bekannt. Dieser hat anstelle der üblichen Zugträger aus Stahl mehrere Aramidseile als Verstärkungsschnüre in seiner Zugträgerlage eingebettet. Wenn die Verstärkungsschnur im Betrieb durch eine Führungsrolle gebogen wird, kommt es zu einer Reibung unter den Strängen der Verstärkungsschnur und zu einer Verschiebung der Stränge gegeneinander. In diesem Fall fasern die Faserfilamente in Folge der Reibung aus, was zu einer reduzierten Festigkeit führt. Zur Vermeidung dieses Problems wird die Oberfläche der Stränge vor dem Verzwirnen zu der Verstärkungsschnur mit einem kautschuklatexhaltigen Klebstoff beschichtet. Kommt es dann zu der Verschiebung der Stränge, so wird das Fasern der Faserfilamente durch den als Schutzschicht wirkenden kautschuklatexhaltigen Klebstoff unterdrückt. Die Beimengung feiner Grafitpartikel oder feiner Molybdändisulfidpartikel zum Klebstoff reduziert den Reibungswiderstand weiter. DE 196 10 603 A1 offenbart ein endloses Transportband nach dem Oberbegriff des Anspruchs 1.

Die EP 2 423 255 A1 bezieht sich auf ein auf Rollen abgestütztes Transportband, wobei ein Schmiermittel als eine mögliche Komponente der Gummizusammensetzung erwähnt wird.

Die DE 10 2005 041 523 A1 schlägt vor, zwischen Untertrum und Unterlage zusätzlich ein mitlaufendes Hilfsband vorzusehen.

Aus der DE 10 2004 002 738 A1 ist ein Bandförderer bekannt, dessen Obertrum über einen Gleittisch abgetragen wird, der sich auf einen z.B. auf dem Boden aufliegenden Tragrahmen abstützt. Das (unbelastete) Untertrum wird rollend von Tragrollen abgetragen.

Dabei ist die Tragseite durch verschiedene Beschichtungswerkstoffe, -dicken und -strukturen im Hinblick auf das Transportgut sowie die gewünschten chemischen, physiologischen und mechanischen Eigenschaften des Bandes optimiert.

Durch den Zugträger und das hierfür eingesetzte Gewebe, beispielsweise ein Polyestergewebe, wird die Anwendungstauglichkeit in hohem Maße beeinflusst. Insbesondere werden dadurch die Bandlaufeigenschaften, das Kraft-/Dehnungsverhalten, elektrostatische Eigenschaften, die Planlage sowie die Messerkanten- und Kurveneignung bestimmt.

Die Laufseite und deren Eigenschaften bestimmen wesentlich die Geräuschemission, die Energieaufnahme sowie den Verschleiß und die Verwendbarkeit für die gleitende Auflage des Transportbandes.

Die Tragseite und die Laufseite können beispielsweise durch Kunststoff- oder Elastomer-Beschichtungen realisiert werden, wobei für verschiedene Transportband-Typen und Ausführungen und die vielfältigen Anforderungen der Praxis unzählige Varianten realisierbar sind.

In der Praxis sind bereits erfolgreich Maßnahmen entwickelt worden, um optimale Reibpaarungen zu realisieren und so einen energiesparenden und umweltschonenden Betrieb zu ermöglichen. Dadurch werden die Betriebskosten durch den geringeren Reibwert reduziert, sodass zugleich auch die im Betrieb erforderliche Antriebsleistung gemindert werden kann. Weiterhin ergeben sich dadurch im Betrieb verringerte Geräuschemissionen und somit verbesserte Arbeitsbedingungen. Darüber hinaus werden hohe Standzeiten erreicht.

Durch die Ausrüstung des Laufseitengewebes mit einer Gleitschicht, die dauerhaft wie ein trockenes Schmiermittel wirkt, wird der Energiebedarf minimiert.

Durch den geringen Reibwert zum Tisch sinkt die effektiv zu übertragende Antriebsleistung.

Ein Transportband mit dem Ziel der Reibungsminimierung ist beispielsweise auch aus der EP 2 259 989 B1 bekannt. Das Transportband hat eine erste und eine zweite Gewebeschicht aus einem Polyestergewebe, die zwischen sich eine Zusammensetzung einschließen, die Polyurethan, Polyvinylchlorid und ein flammenhemmendes Mittel enthält. Bei der Herstellung des Transportbands wird auf den Zugträger zunächst tragseitig ein Haftmittel und anschließend eine Kunststoffbeschichtung aufgebracht. Schließlich wird noch ein Schmiermittel laufseitig aufgetragen.

Ferner ist aus der EP 1 281 639 B1 ein Lochband, vorzugsweise aus Metall, mit angebrachter Antihaftbeschichtung bekannt, die PTFE (Polytetrafluorethylen), Silikon oder Nanopartikel umfasst.

In der Praxis ist das Aufbringen der reibungsmindernden Schicht mit einem zusätzlichen Arbeitsschritt und somit mit einem zusätzlichen Aufwand verbunden. Zudem hat sich gezeigt, dass eine vergleichsweise große Schichtdicke der reibungsmindernden Schicht zwar die Reibung zuverlässig reduziert, die Schicht jedoch ihrerseits einem erhöhten Abtrag und somit Verschleiß unterworfen ist.

Der Erfindung liegt die Aufgabe zugrunde, eine Möglichkeit zu schaffen, den Aufwand zur Herstellung eines reibungsoptimierten Transportbandes zu verringern. Weiterhin liegt der Erfindung die Aufgabe zugrunde, eine derart ausgestattete Transportvorrichtung zu schaffen, bei welcher der im Betrieb auftretende Reibungswiderstand zwischen dem Gleittisch und der Laufseite des Transportbandes reduziert ist.

Die erstgenannte Aufgabe wird erfindungsgemäß mit einem Transportband gemäß den Merkmalen des Anspruches 1 gelöst. Die weitere Ausgestaltung der Erfindung ist den Unteransprüchen zu entnehmen.

Erfindungsgemäß ist also ein Transportband vorgesehen, bei dem die Adhäsionsschicht zwischen der die Laufseite bildenden Schicht und dem Zugträger eine Zusammensetzung mit einem ersten Anteil eines Adhäsionsmittels sowie mit einem zweiten Anteil eines Schmiermittels enthält, wobei zwischen der den Zugträger bildenden Schicht und der Adhäsionsschicht eine physikalische Verbindung gebildet ist, die eine für den Anteil des Schmiermittels undurchlässige Sperrschicht bildet, wobei die chemische Anbindung zwischen der Adhäsionsschicht und der die Laufseite bildenden Schicht für die Anteile des Schmiermittels zumindest eingeschränkt durchlässig ist, und dass die die Laufseite bildende Schicht für den Anteil des Schmiermittels durchdringbar ist, sodass sich ein Anteil des Schmiermittels auf einer der den Zugträger bildenden Schicht abgewandten Außenseite der ersten Schicht sammelt. Die Erfindung geht dabei von der überraschenden Erkenntnis aus, dass das Schmiermittel die adhäsiven Eigenschaften zwischen den beiden dadurch verbundenen Schichten nicht oder nicht in nennenswertem Umfang reduziert.

Zugleich führt jedoch in vorteilhafter Weise eine Wanderungsbewegung des zweiten Anteiles des Schmiermittels insbesondere durch Diffusion oder Migration, deren Mechanismen noch nicht abschließend verstanden sind, dazu, dass sich ein Anteil des Schmiermittels auf der dem Zugträger abgewandten Außenseite der Laufseite sammelt und dadurch dort die gewünschten reibungsmindernden Eigenschaften realisiert werden.

Diese Ansammlung des Schmiermittels kann beispielsweise auf der Laufseite flächig erfolgen und dort eine weitere Schicht bilden. Indem die reibungsmindernden Eigenschaften ohne einen zusätzlichen Arbeitsgang erzeugt werden können, wird der Herstellungsaufwand vermindert und die Kosten werden reduziert. Darüber hinaus hat sich gezeigt, dass das Schmiermittel, wenn es im Betrieb zu einem Abtrag desselben auf der Laufseite kommt, aus dem Zwischenbereich zwischen den Schichten nachwandert und somit über einen sehr langen Zeitraum eine ausreichende Menge des Schmiermittels auf der Laufseite verfügbar ist.

Der Erfindung liegt dabei die für den Fachmann überraschende Erkenntnis zugrunde, dass die Trennfestigkeit zwischen der die Laufseite bildenden Schicht und dem Zugträger aufgrund der zwischen diesen eingebrachten Zusammensetzung nicht vermindert ist, obwohl nach dem Vorurteil in der Fachwelt das Schmiermittel die Ausbildung der Verbindung beeinträchtigen müsste.

Nach der derzeitigen Erkenntnis ist davon auszugehen, dass die Konzentration des Schmiermittels unter Zugrundelegung einer homogenen Verteilung die Verbindung nicht beeinträchtigt. Unter der Wirkung der auftretenden Diffusionseffekte wandern die freien Anteile des Schmiermittels in der Zusammensetzung und dringen so an die Oberfläche, also die Außenfläche der Laufseite, sammeln sich dort und führen zu einer Erhöhung der örtlichen Konzentration.

Mit anderen Worten führt die zunächst homogene Verteilung in der Zusammensetzung zunächst dazu, dass der Anteil des Schmiermittels im Bereich zwischen dem Zugträger und der Laufseite die adhäsiven Eigenschaften der Zusammensetzung, basierend auf dem Anteil des Adhäsionsmittels, nicht bzw. nicht wesentlich beeinträchtigt. Diese dadurch entstehende Adhäsionsverbindung ist nach der hier vornehmlich wirksamen physikalischen Reaktion von späteren Veränderungen der lokalen Konzentration in der Zusammensetzung unabhängig.

Die als Sperre wirkende Adhäsionsverbindung begünstigt die später eintretende Wanderbewegung zu der dieser abgewandten freien Oberfläche, durch die laufseitige Schicht hindurch bis zu der Außenseite der Laufseite, wo es infolgedessen zu einer lokalen Erhöhung der Konzentration zugunsten des Schmiermittelanteiles kommt.

Dabei hat es sich bereits als besonders vorteilhaft erwiesen, wenn die Zusammensetzung PVC-Pulver, Weichmacher, Stabilisatoren, Haftvermittler oder PU-Kleber umfasst. Hierzu eignet sich beispielsweise Isocyanat, gegebenenfalls in Verbindung mit einem Farbstoff. Die Isocyanate vernetzen sich und reagieren mit dem Polyester-Gewebe der Schicht des Zugträgers.

Mit dem Zugträger entsteht in der Adhäsionsschicht eine physikalische Verbindung, während in Bezug auf die Außenschicht eine chemische Reaktion zu der Verbindung führt. Dabei findet eine Reaktion zwischen dem Isocyanat und dem Schmiermittel, beispielsweise Silikon, nicht statt. Beide Verbindungen werden nach ihrer Reaktion durch spätere Diffusion der Schmiermittelanteile nicht verändert, allerdings kann die physikalische Anbindung eine für den Schmiermittelanteil undurchlässige Sperrschicht bilden, während die chemische Anbindung für die Schmiermittelanteile zumindest eingeschränkt durchlässig ist.

Besonders bevorzugt enthält das Schmiermittel natürliche oder künstliche Wachse, Silikone, Polysiloxan und/oder Polydimethylsiloxan .

Die zweitgenannte Aufgabe wird erfindungsgemäß noch mit einer mit dem Transportband ausgestatteten Transportvorrichtung mit einem zum Stützen des Transportbandes dienenden Gleittisch mit einer Kontaktfläche für die Laufseite des Transportbandes gelöst.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in
- Fig. 1: eine mit einem Transportband ausgestattete Transportvorrichtung in einer Prinzipdarstellung;
- Fig. 2: eine Variante eines Transportbandes mit einer durch ein Gewebe gebildeten Laufseite;
- Fig. 3: eine weitere Variante eines Transportbandes mit zwei Zugträgern;
- Fig. 4: eine weitere Variante eines Transportbandes mit zwei eine Zwischenschicht einschließenden Zugträgern und zwei reibungsoptimierten äußeren Schichten.

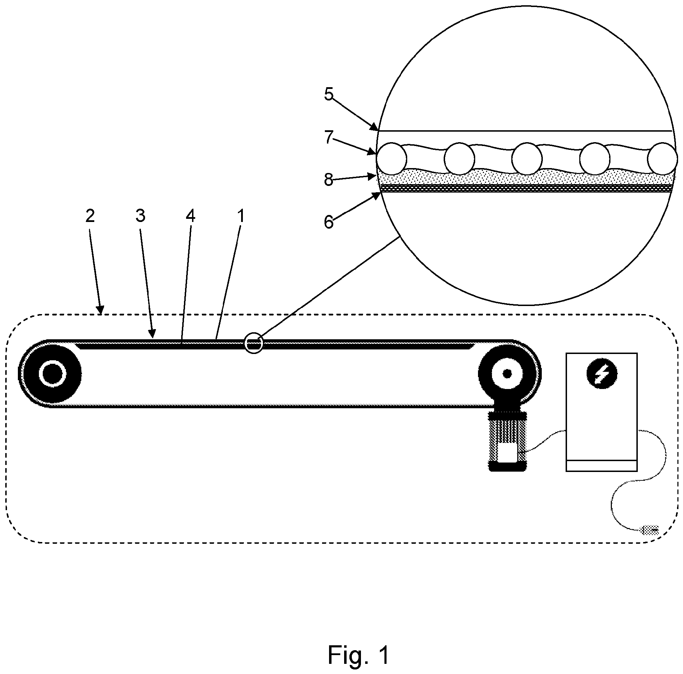

Figur 1 zeigt in einer Prinzipdarstellung eine mit einem Transportband 1 ausgestattete Transportvorrichtung 2 mit einer gleitenden Anordnung. Hierzu ist ein Obertrum 3 auf einem Gleittisch 4 abgestützt. Das endlose, als Förderband dienende Transportband 1 weist einen mehrschichtigen Aufbau auf, mit zumindest einer eine Tragseite bildenden Schicht 5 aus einem Gewebe und mit einer eine Laufseite bildenden, insbesondere als eine Beschichtung ausgeführten Schicht 6, die mit einer einen Zugträger bildenden Schicht 7 mittels einer Adhäsionsschicht 8 im Gebrauch untrennbar miteinander verbunden sind. Die Adhäsionsschicht 8 zwischen der die Laufseite bildenden Schicht 6 und dem Zugträger weist eine Zusammensetzung mit einem ersten Anteil eines Adhäsionsmittels sowie mit einem zweiten Anteil eines Schmiermittels auf. Der Erfindung liegt dabei die für den Fachmann überraschende Erkenntnis zugrunde, dass die Trennfestigkeit zwischen der die Laufseite bildenden Schicht 6 und der den Zugträger bildenden Schicht 7 aufgrund der zwischen diesen eingebrachten Zusammensetzung nicht vermindert ist. Vielmehr bildet sich aufgrund der zunächst homogenen Mischung in der Zusammensetzung eine gegenüber den aus dem Stand der Technik bekannten Adhäsionsverbindungen unveränderte, unlösbare Verbindung der Laufseite mit der Schicht 7 aus. Die so entstehende Kontaktfläche bildet eine Sperrfläche für die daraufhin eintretende Wanderungsbewegung des zweiten Anteiles der Zusammensetzung, der sich bedingt durch die einseitige Sperrschicht vornehmlich in entgegengesetzter Richtung bewegt und dort zu einer örtlichen Erhöhung der Konzentration des Schmiermittels führt. Hinzu kommt, dass der Schmiermittelanteil die Laufseite durchdringt und sich auf der Außenseite der Schicht 6 vermehrt ablagert. Somit entsteht der gewünschte Effekt der Schmiermittelversorgung auf der dem Gleittisch 4 zugewandten Fläche der Laufseite allein aufgrund atomarer Wanderungsbewegungen, wobei zudem ein selbsttätiger Ausgleich bei einem Abrieb des Schmiermittels eintritt.

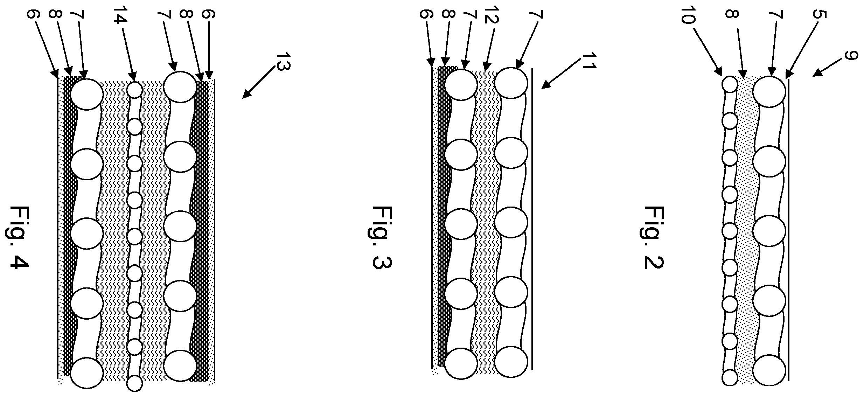

In Figur 2 ist ergänzend noch eine Variante eines Transportbandes 9 mit einer durch ein Gewebe gebildeten, als eine Laufseite dienenden Schicht 10 gezeigt, die mit der den Zugträger bildenden Schicht 7 mittels der Adhäsionsschicht 8 verbunden ist. Das Transportband 9 weist im Übrigen einen im Wesentlichen übereinstimmenden Aufbau mit dem in Figur 1 gezeigten Transportband 1 mit einer eine Tragseite bildenden Schicht 5 aus einem Gewebe auf.

Demgegenüber unterscheidet sich eine in Figur 3 gezeigte Variante eines weiteren Transportbandes 11 von dem in Figur 1 gezeigten Transportband 1 durch zwei gleiche, parallel angeordnete, jeweils einen Zugträger bildende Schichten 7, die durch eine Kontaktschicht 12 dauerhaft verbunden sind. Die untere der beiden Schichten 7 ist mittels der Adhäsionsschicht 8 mit der die Laufseite bildenden Schicht 6 verbunden. Somit kann in einfacher Weise die zulässige Zugkraft erhöht werden.

Weiterhin zeigt Figur 4 noch eine weitere Variante eines Transportbandes 13 mit zwei eine Zwischenschicht 14 einschließenden, jeweils einen Zugträger bildenden Schichten 7 aus einem Gewebe und zwei reibungsoptimierten, jeweils eine Außenseite bildenden Schichten 6. Die jeweils mittels der Adhäsionsschicht 8 mit der zugeordneten Schicht 7 verbundenen Schichten 6 können daher wahlweise als Tragseite oder Laufseite eingesetzt werden.

## Patentansprüche

1. Endloses Transportband (1, 9, 11, 13) mit einem mehrschichtigen Aufbau, mit zumindest einer ersten, eine Laufseite bildenden Schicht (6, 10) und mit zumindest einer zweiten, insbesondere eine Tragseite bildenden Schicht (5), wobei zumindest eine der Schichten (5, 6, 10) mit zumindest einer einen Zugträger bildenden Schicht (7) mittels einer Adhäsionsschicht (8) verbunden ist, wobei die Adhäsionsschicht (8) eine Zusammensetzung mit einem ersten Anteil eines Adhäsionsmittels sowie mit einem zweiten Anteil eines Schmiermittels enthält, **dadurch gekennzeichnet, dass** zwischen der den Zugträger bildenden Schicht (7) und der Adhäsionsschicht (8) eine physikalische Verbindung gebildet ist, die eine für den zweiten Anteil des Schmiermittels undurchlässige Sperrschicht bildet, wobei die chemische Anbindung zwischen der Adhäsionsschicht (8) und der die Laufseite bildenden Schicht (6, 10) für die Anteile des Schmiermittels zumindest eingeschränkt durchlässig ist, und dass die die Laufseite bildende Schicht (6, 10) für den Anteil des Schmiermittels durchdringbar ist, sodass sich ein Anteil des Schmiermittels auf einer der den Zugträger bildenden Schicht (7) abgewandten Außenseite der ersten Schicht (6, 10) sammelt.

2. Transportband (1, 9, 11, 13) nach Anspruch 1, **dadurch gekennzeichnet, dass** sich ein Anteil des Schmiermittels auf der Laufseite flächig ablagert.

3. Transportband (1, 9, 11, 13) nach zumindest einem der vorhergehenden Ansprüche, **dadurch gekennzeichnet, dass** die Zusammensetzung ein PVC-Pulver aufweist.

4. Transportband (1, 9, 11, 13) nach zumindest einem der vorhergehenden Ansprüche, **dadurch gekennzeichnet, dass** die Zusammensetzung Stabilisatoren aufweist.

5. Transportband (1, 9, 11, 13) nach zumindest einem der vorhergehenden Ansprüche, **dadurch gekennzeichnet, dass** die Zusammensetzung einen Haftvermittler aufweist.

6. Transportband (1, 9, 11, 13) nach zumindest einem der vorhergehenden Ansprüche, **dadurch gekennzeichnet, dass** die Zusammensetzung einen PU-Kleber aufweist.

7. Transportband (1, 9, 11, 13) nach zumindest einem der vorhergehenden Ansprüche, **dadurch gekennzeichnet, dass** die Zusammensetzung natürliche oder künstliche Wachse, Silikone, Stärke, Öl, Polysiloxan und/oder Polydimethylsiloxan aufweist.

8. Transportband (1, 9, 11, 13) nach zumindest einem der vorhergehenden Ansprüche, **dadurch gekennzeichnet, dass** die den Zugträger bildende Schicht (7) zumindest eine Lage eines textilen Gewebes, textiler Fäden, Kunststoff-Drähten, Vlies und/oder einer Kunststoff-Folie umfasst.

9. Transportband (1, 9, 11, 13) nach zumindest einem der vorhergehenden Ansprüche, **dadurch gekennzeichnet, dass** die zweite Schicht (5) einen Anteil eines Schmiermittels aufweist.

10. Transportband (1, 9, 11, 13) nach zumindest einem der vorhergehenden Ansprüche, **dadurch gekennzeichnet, dass** die erste Schicht (6, 10) im Wesentlichen aus einem Gewebe, Gewirke, Gestricke, einer Folie und/oder einer Beschichtung besteht.

11. Eine mit dem Transportband (1, 9, 11, 13) nach zumindest einem der vorhergehenden Ansprüche ausgestattete Transportvorrichtung (2) mit einem zum Stützen des Transportbandes (1) dienenden Gleittisch (4) mit einer Kontaktfläche für eine die Laufseite bildende Schicht (6, 10) des Transportbandes (1, 9, 11, 13).

## Claims

1. Continuous transporting belt (1, 9, 11, 13) having a multilayered structure, with at least a first layer (6, 10) that forms a running side, and with at least a second layer (5) that forms in particular a load-bearing side, wherein at least one of the layers (5, 6, 10) is connected by means of an adhesion layer (8) to at least one layer (7) that forms a tension member, wherein the adhesion layer (8) contains a composition with a first portion of an adhesive and with a second portion of a lubricant, **characterized in that** a physical connection is formed between the layer (7) that forms the tension member and the adhesion layer (8), said connection forming a barrier layer that is impermeable for the second portion of the lubricant, wherein the chemical bonding between the adhesion layer (8) and the layer (6, 10) that forms the running side is permeable, at least to a restricted extent, for the portions of the lubricant, and **in that** the portion of the lubricant can penetrate through the layer (6, 10) that forms the running side, and therefore a portion of the lubricant collects on an outer side of the first layer (6, 10) that is facing away from the layer (7) that forms the tension member.

2. Transporting belt (1, 9, 11, 13) according to Claim 1, **characterized in that** a portion of the lubricant is deposited over the surface area on the running side.

3. Transporting belt (1, 9, 11, 13) according to at least one of the preceding claims, **characterized in that** the composition comprises a PVC powder.

4. Transporting belt (1, 9, 11, 13) according to at least one of the preceding claims, **characterized in that** the composition comprises stabilizers.

5. Transporting belt (1, 9, 11, 13) according to at least one of the preceding claims, **characterized in that** the composition comprises an adhesion promoter.

6. Transporting belt (1, 9, 11, 13) according to at least one of the preceding claims, **characterized in that** the composition comprises a PU adhesive.

7. Transporting belt (1, 9, 11, 13) according to at least one of the preceding claims, **characterized in that** the composition comprises natural or synthetic waxes, silicones, starch, oil, polysiloxane and/or polydimethyl siloxane.

8. Transporting belt (1, 9, 11, 13) according to at least one of the preceding claims, **characterized in that** the layer (7) that forms the tension member comprises at least one layer of a textile fabric, textile filaments, wires of plastic, a nonwoven and/or a film of plastic.

9. Transporting belt (1, 9, 11, 13) according to at least one of the preceding claims, **characterized in that** the second layer (5) has a portion of a lubricant.

10. Transporting belt (1, 9, 11, 13) according to at least one of the preceding claims, **characterized in that** the first layer (6, 10) substantially consists of a woven or knitted fabric, a film and/or a coating.

11. Transporting device (2) equipped with the transporting belt (1, 9, 11, 13) according to at least one of the preceding claims, with a sliding table (4) that serves for supporting the transporting belt (1) and has a contact face for a layer (6, 10) of the transporting belt (1, 9, 11, 13) that forms the running side.

## Revendications

1. Bande de transport sans fin (1, 9, 11, 13) munie d'une structure multicouche, munie d'au moins une première couche (6, 10), formant un côté de déplacement, et munie d'au moins une deuxième couche (5), formant notamment un côté porteur, au moins une des couches (5, 6, 10) étant reliée avec au moins une couche (7) formant un renfort de traction au moyen d'une couche d'adhésion (8), la couche d'adhésion (8) contenant une composition munie d'une première proportion d'un agent d'adhésion, ainsi que munie d'une deuxième proportion d'un agent lubrifiant, **caractérisée en ce qu'** entre la couche (7) formant le renfort de traction et la couche d'adhésion (8), est formée une liaison physique, qui forme une couche de barrière imperméable pour la deuxième proportion de l'agent lubrifiant, la liaison chimique entre la couche d'adhésion (8) et la couche (6, 10) formant le côté de déplacement étant perméable au moins de manière limitée pour les proportions de l'agent lubrifiant, et **en ce que** la couche (6, 10) formant le côté de déplacement est pénétrable pour la proportion de l'agent lubrifiant, de telle sorte qu'une proportion de l'agent lubrifiant se collecte sur un côté extérieur de la première couche (6, 10), détourné de la couche (7) formant le renfort de traction.

2. Bande de transport (1, 9, 11, 13) selon la revendication 1, **caractérisée en ce qu'**une proportion de l'agent lubrifiant se dépose en surface sur le côté de déplacement.

3. Bande de transport (1, 9, 11, 13) selon au moins l'une quelconque des revendications précédentes, **caractérisée en ce que** la composition comprend une poudre de PVC.

4. Bande de transport (1, 9, 11, 13) selon au moins l'une quelconque des revendications précédentes, **caractérisée en ce que** la composition comprend des stabilisateurs.

5. Bande de transport (1, 9, 11, 13) selon au moins l'une quelconque des revendications précédentes, **caractérisée en ce que** la composition comprend un promoteur d'adhésion.

6. Bande de transport (1, 9, 11, 13) selon au moins l'une quelconque des revendications précédentes, **caractérisée en ce que** la composition comprend une colle PU.

7. Bande de transport (1, 9, 11, 13) selon au moins l'une quelconque des revendications précédentes, **caractérisée en ce que** la composition comprend des cires naturelles ou synthétiques, des silicones, de l'amidon, de l'huile, du polysiloxane et/ou du polydiméthylsiloxane.

8. Bande de transport (1, 9, 11, 13) selon au moins l'une quelconque des revendications précédentes, **caractérisée en ce que** la couche (7) formant le renfort de traction comprend au moins une strate d'un tissu textile, de fils textiles, de câbles en matière plastique, de non-tissé et/ou d'un film de matière plastique.

9. Bande de transport (1, 9, 11, 13) selon au moins l'une quelconque des revendications précédentes, **caractérisée en ce que** la deuxième couche (5) comprend une proportion d'un agent lubrifiant.

10. Bande de transport (1, 9, 11, 13) selon au moins l'une quelconque des revendications précédentes, **caractérisée en ce que** la première couche (6, 10) est essentiellement constituée par un tissu, un article à mailles, un film et/ou un revêtement.

11. Dispositif de transport (2) équipé de la bande de transport (1, 9, 11, 13) selon au moins l'une quelconque des revendications précédentes, muni d'une table coulissante (4), servant au support de la bande de transport (1), munie d'une surface de contact pour une couche (6, 10) formant le côté de déplacement de la bande de transport (1, 9, 11, 13).
